# EUROPEAN PATENT APPLICATION

(11) **EP 3 805 784 A1**
(43) Date of publication of application: **14.04.2021**
(21) Application number: 18944341.9
(22) Date of filing: 26.12.2018
(51) Int. Cl.: G01S 7/41

(54) **TARGET DETECTION METHOD, SYSTEM AND COMPUTER-READABLE STORAGE MEDIUM**

(71) Applicant: SZ DJI Technology Co., Ltd., Shenzhen, Guangdong 518057 (CN)
(72) Inventor: LI, Yiqiang, Shenzhen, Guangdong 518057 (CN); LU, Xinfei, Shenzhen, Guangdong 518057 (CN); DAI, Weilong, Shenzhen, Guangdong 518057 (CN)
(74) Representative: Appelt, Christian W.
(86) International application number: PCT/CN2018/124005
(87) International publication number: WO 2020/132972

(57) **Abstract**

A target detection method, a system, and a computer-readable storage medium are provided. The method includes: obtaining a scattering point set by using a radar sensor, where the scattering point set includes a plurality of scattering points; grouping the plurality of scattering points into at least one area based on characteristic information of the scattering points; and for a scattering point in each area, performing target detection on the scattering point in the area based on a detection parameter corresponding to the area, where detection parameters are set for different areas separately. Embodiments of the present invention can be used to effectively distinguish between a stationary object and a moving object, improve accuracy of target detection, and improve efficiency of target detection.

## Description

### TECHNICAL FIELD

The present invention relates to the field of communications technologies, and in particular, to a target detection method, a system, and a computer-readable storage medium.

### BACKGROUND

In a self-driving system, a vehicle-mounted sensor is an important source of information for perceiving an external environment and determining an action of the self-driving system. As a vehicle-mounted sensor, millimeter wave radar has advantages of all-time, all-weather, high accuracy, and the like. Therefore, the millimeter wave radar has quickly become an important part of the self-driving system.

Millimeter wave radar can implement target detection by detecting a intensity characteristics of a scattering point. In all target detection algorithms, a CFAR (Constant False-Alarm Rate, constant false-alarm rate) algorithm is a classical target detection algorithm, which can be achieved by setting a fixed threshold.

However, due to the existence of a large quantity of stationary objects (such as trees, fences, and stationary vehicles, etc.) in an actual road environment, when a traditional global fixed threshold CFAR detection method is applied in the actual road environment, it will cause problems such as blocking of a target point and difficulty in distinguishing between a moving point and a stationary point, which affects target detection and discrimination of the millimeter wave radar, thereby affecting the performance of the millimeter wave radar and even the decision-making of an upper-layer perception system of a vehicle.

### BRIEF SUMMARY

The present invention provides a target detection method, system, and computer readable storage medium, which may effectively distinguish static objects from moving objects, improve the accuracy of target detection, and improve the efficiency of target detection.

In accordance with a first aspect of the exemplary embodiments of this present invention, there is provided a target detection method applied to a radar sensor includes following steps: obtaining a scattering point set by using a radar sensor, wherein the scattering point set includes a plurality of scattering points; grouping the plurality of scattering points into at least one area according to characteristic characteristic information of the scattering points; and for the scattering point in each area, performing a target detection on the scattering point in the area according to a detection parameters corresponding to the area, wherein the detection parameters are individually set for different areas separately.

In accordance with a second aspect of the exemplary embodiments of this present invention, there is provided a target detection method applied to a radar sensor includes following steps: obtaining a range-Doppler plane by a radar sensor, wherein the range-Doppler plane includes a plurality of scattering points, and the scattering points in the range-Doppler plane correspond to energy values; for a scattering point in the range-Doppler plane, adding the scattering point to a scattering point set according to an energy value of the scattering point and an energy threshold, or discarding the scattering point; and according to characteristic information of a scattering point in the scattering point set, performing a target detection on the scattering point.

In accordance with a third aspect of the exemplary embodiments of this present invention, there is provided a radar sensing system, including a radar sensor, a memory, and a processor, wherein the memory is configured to stores computer instructions executable by the processor; the processor is configured to read the computer instructions from the memory to implement the following steps: obtaining a scattering point set, wherein the scattering point set includes a plurality of scattering points; grouping the plurality of scattering points into at least one area according to characteristic information of the scattering points; and for the scattering point in each area, performing target detection on the scattering point in the area based on detection parameters corresponding to the area, wherein detection parameters are set for different areas separately; and the radar sensor is configured to obtain the scattering point set and provide the scattering point set to the processor.

In accordance with a forth aspect of the exemplary embodiments of this present invention, a radar sensing system includes a radar sensor, a memory, and a processor, wherein the memory is configured to store computer instructions executable by the processor; the processor is configured to read the computer instructions from the memory to implement the following steps: obtaining a range-Doppler plane, wherein the range-Doppler plane includes a plurality of scattering points, and the scattering points in the range-Doppler plane correspond to energy values; for a scattering point in the range-Doppler plane, adding the scattering point to a scattering point set based on an energy value of the scattering point and an energy threshold, or discarding the scattering point; and characteristic information of a scattering point in the scattering point set, performing a target detection on the scattering point; and the radar sensor is configured to obtain the range-Doppler plane, and provide the range-Doppler plane to the processor.

In accordance with a fifth aspect of exemplary embodiments of this present invention, there is provided a computer-readable storage medium, which stores computer instructions, and when the computer instructions are executed, the foregoing target detection method that is the method of the first aspect of the exemplary embodiments or the method of the second aspect of the exemplary embodiments of this present invention, is implemented,

Based on above-mentioned technical solutions, the exemplary embodiments of this present invention provide a target detection method for millimeter wave radar, which may solve the problems of targets blocking of target detection and stationary points detection by dividing scattering points into different areas and applying different parameters for different areas, therefore effectively distinguish static objects from moving objects, improve the accuracy of target detection, and improve the efficiency of target detection.

### BRIEF DESCRIPTION OF THE DRAWINGS

To describe the technical solutions in the embodiments of the present invention or in the prior art more clearly, the following briefly describes the accompanying drawings required for describing the embodiments of the present invention or the prior art. Apparently, the accompanying drawings in the following description show merely some embodiments described in the present invention, and a person of ordinary skill in the art may still derive other drawings from these accompanying drawings of the embodiments of the present invention.
FIG. 1 is a schematic diagram of a target detection method according to an exemplary embodiment in an implementation;
FIG. 2 is a schematic diagram of an a target detection method according to another exemplary embodiment in another implementation;
FIG. 3 is a schematic diagram of a target detection method according to another exemplary embodiment in another implementation;
FIG. 4A to FIG. 4E are schematic diagrams of RCS filtering in an exemplary implementation;
FIG. 5A to FIG. 5B are schematic diagrams of filtering based on a one-ring rule in an exemplary implementation;
FIG. 6 is a schematic diagram of area division in an exemplary implementation;
FIG. 7 is a schematic diagram of target detection in an exemplary implementation; and
FIG. 8 is a block diagram of a radar sensing system according to an exemplary embodiment in an exemplary implementation.

### DETAILED DESCRIPTION OF THE DRAWINGS AND THE PRESENTLY PREFERRED EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention. In addition, under a condition that no conflict occurs, the following embodiments and features in the embodiments may be mutually combined.

The terms used in the present invention are used only to describe specific embodiments, and not intended to limit the present invention. The terms "a", "said", and "the" in singular forms used in the present invention and the claims are also intended to include plural forms thereof, unless otherwise clearly indicated in a context. It should be understood that the term "and/or" used in this specification includes any or all possible combinations of one or more associated listed items.

Although terms such as first, second, and third may be used to describe various types of information in the present invention, the information is not limited to the terms. The terms are used to distinguish information of a same type from each other. For example, without departing from the scope of the present invention, first information may also be referred to as second information; and similarly, second information may also be referred to as first information. This depends on a context. In addition, a used term "if" may be interpreted as "when", or "while", or "in response to determining that".

### Embodiment 1

This embodiment of the present invention provides a target detection method applied to a radar sensor. The radar sensor may be deployed in a mobile platform (such as a robot, an unmanned aerial vehicle, an unmanned vehicle, an ordinary vehicle, VR glasses, or AR glasses), or may be deployed in other vehicles. This is not limitation on this matter as long as the radar sensor is deployed.

The radar sensor may be a millimeter wave radar sensor or may be other types of radar sensors. There is no limitation on this matter. The millimeter wave radar sensor is the radar that works in the millimeter wave band for detection, usually the millimeter wave is the frequency domain of 30 to 300 GHz (wavelength is 1 to 10 mm).

The above-mentioned target detection method may be: applying CFAR to achieve target detection, or applying other algorithms to achieve target detection. There is no limitation as long as target detection can be achieved.

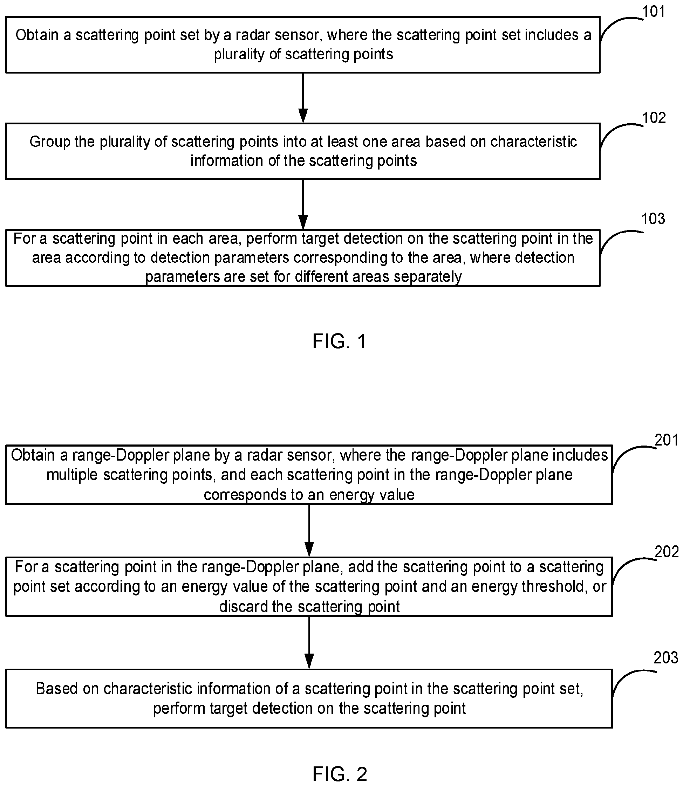

Refer to FIG. 1, which is a schematic flowchart of a target detection method. The method may include the following steps:
Step 101: obtaining a scattering point set by a radar sensor, where the scattering point set includes a plurality of scattering points.

Specifically, obtaining a scattering point set by a radar sensor may include but is not limited to:
manner 1: obtaining a range-Doppler plane by the radar sensor, where the range-Doppler plane includes a plurality of scattering points; and if the energy value of a scattering point in the range-Doppler plane is greater than or equal to an energy threshold, then adding the scattering point to the scattering point set; otherwise, discarding the scattering point;
manner 2: obtaining a range-Doppler plane by using the radar sensor, where the range-Doppler plane includes a plurality of scattering points; and if the energy value of a scattering point in the range-Doppler plane is greater than or equal to an energy value of a reference point, adding the scattering point to the scattering point set; otherwise, discarding the scattering point; or
manner 3: obtaining a range-Doppler plane by using the radar sensor, where the range-Doppler plane includes a plurality of scattering points; and if the energy value of a scattering point in the range-Doppler plane is less than an energy threshold, discarding the scattering point; or if the energy value of a scattering point in the range-Doppler plane is greater than or equal to an energy threshold, then when the energy value of the scattering point is greater than or equal to the energy value of a reference point, adding the scattering point to the scattering point set, or when the energy value of the scattering point is less than the energy value of a reference point, discarding the scattering point.

For the manner 1 and the manner 3, the energy information and distance information of a target position may be collected by the radar sensor; and an energy-distance variation curve of the radar sensor is obtained according to the energy information and the distance information, and the energy threshold is determined according to the variation curve. The manner 1 and the manner 3 are implemented according to the energy threshold.

In an example, determining the energy threshold according to the variation curve may include but is not limited to: determining a first threshold curve according to the variation curve; obtaining a second threshold curve according to noise data of the radar sensor; and determining the energy threshold according to the first threshold curve and the second threshold curve.

For manner 2 and manner 3, the reference point of the scattering point in the range-Doppler plane includes: one or more reference scattering points surrounding the scattering point. Based on this, the reference point corresponding to the scattering point in the range-Doppler plane may be determined, and then the manner 1 and the manner 3 are implemented based on the energy value of the reference point.

Step 102: grouping the plurality of scattering points into at least one area according to characteristic information of the scattering points.

Specifically, for each scattering point in the scattering point set, the scattering point may be grouped into at least one area based on characteristic information of the scattering point. For example, in this embodiment, the area may be divided into a zero-velocity detection area, a near field detection area, and an ordinary detection area, or certainly it may be another area. There is no limitation on this matter. Based on this, for each scattering point in the scattering point set, the scattering point is grouped into a zero-velocity detection area, a near field detection area, or an ordinary detection area according to characteristic information of the scattering point.

The above-mentioned characteristic information may include but is not limited to velocity information and/or distance information.

In an example, grouping the scattering point into a zero-velocity detection area based on characteristic information of the scattering point may include: in a moving process of a movable platform, if velocity information of the scattering point and a moving velocity of the movable platform meet a preset velocity relationship, grouping the scattering point into the zero-velocity detection area.

In an example, grouping the scattering point into a near field detection area according to characteristic information of the scattering point may include: in a moving process of a movable platform, if it is determined, according to the distance information of the scattering point, that the scattering point is located in a preset area of the movable platform, grouping the scattering point into the near field detection area.

In an example, grouping the scattering point into an ordinary detection area according to characteristic information of the scattering point may include: in a moving process of a movable platform, if the velocity information of the scattering point and the moving velocity of the movable platform do not meet a preset velocity relationship, and it is determined, according to the distance information of the scattering point, that the scattering point is not located in the preset area of the movable platform, and then grouping the scattering point into the ordinary detection area.

Step 103: for a scattering point in each area, performing target detection on the scattering point in the area according to detection parameters corresponding to the area, wherein the detection parameters are set for different areas separately.

In an example, the area may include but is not limited to a zero-velocity detection area, a near field detection area, or an ordinary detection area; the detection parameters of the zero-velocity detection area is less than the detection parameters of the ordinary detection area; and the detection parameters of the near field detection area is less than the detection parameters of the ordinary detection area.

In an example, performing target detection on the scattering point in the area according to the detection parameters corresponding to the area may include: performing target detection on the scattering point in the area based on a CFAR target detection algorithm and the detection parameters corresponding to the area, where the detection parameters may include the CFAR detection parameters.

In an example, performing target detection on the scattering point in the area according to the detection parameters corresponding to the area may include: if the detection parameters include a reference quantity, a protection quantity, a sorting sequence number, and a threshold, determining reference scattering points for the scattering point according to the reference quantity and the protection quantity; sorting all the reference scattering points, and selecting a reference scattering point according to the sorting sequence number; and according to the energy value of the scattering point, the energy value of the selected reference scattering point, and the threshold, determining whether the scattering point is a detection target.

Wherein, according to the energy value of the scattering point, the energy value of the selected reference scattering point, and the threshold, determining whether the scattering point is a detection target may include: determining a level estimated value according to the energy value of the selected reference scattering point and the threshold; and if the energy value of the scattering point is greater than or equal to the level estimated value, determining that the scattering point is a detection target; otherwise, determining that the scattering point is not a detection target.

Wherein, the area may include a zero-velocity detection area, a near field detection area, or an ordinary detection area; based on this, a threshold of the zero-velocity detection area may be less than a threshold of the ordinary detection area; and a threshold of the near field detection area may be less than the threshold of the ordinary detection area.

Further, the threshold of the zero-velocity detection area can be dynamically adjusted based on a quantity of stationary points; and the threshold of the near field detection area can be dynamically adjusted based on the quantity of stationary points.

Based on the foregoing technical solution, this embodiment of the present invention provides a target detection method for a millimeter wave radar, by grouping scattering points into areas, and using different detection parameters for different areas, problems such as a target blocking effect of target detection and detection of a stationary point are solved. The method can effectively distinguish between a stationary object and a moving object, improve the accuracy of target detection, improve the efficiency of target detection, and improve the effect of target detection.

In the foregoing manner, a scattering point in the range-Doppler plane may be filtered, such as using an energy threshold to filter the scattering point in the range-Doppler plane, or using the energy value of the reference point to filter the scattering point in the range-Doppler plane. Therefore, when target detection is performed on scattering points by using the CFAR target detection algorithm, a quantity of scattering points can be reduced, a quantity of operations is reduced, and an operation speed is increased.

### Embodiment 2

This embodiment of the present invention provides a target detection method applied to a radar sensor. The radar sensor may be deployed in a movable platform (such as a robot, an unmanned aerial vehicle, an unmanned vehicle, an ordinary vehicle, VR glasses, or AR glasses), or may be deployed in other vehicles. This is not limited as long as a radar sensor is deployed.

The radar sensor may be a millimeter wave radar sensor, or may be another type of radar sensor. There is no limitation. In addition, the above-mentioned target detection method may be: applying CFAR to achieve target detection, or applying other algorithms to achieve target detection. There is no limitation.

Refer to FIG. 2, which is a schematic flowchart of a target detection method. The method may include the following steps:
Step 201: obtaining a range-Doppler plane by a radar sensor, where the range-Doppler plane includes a plurality of scattering points, and each scattering point in the range-Doppler plane corresponds to an energy value.
Step 202: for each scattering point in the range-Doppler plane, according to an energy value of the scattering point and an energy threshold, adding the scattering point to a scattering point set or discarding the scattering point.

In an example, if the energy value of the scattering point is greater than or equal to the energy threshold, the scattering point is added to the scattering point set; or if the energy value of the scattering point is less than the energy threshold, the scattering point is discarded.

In another example, if the energy value of the scattering point is less than the energy threshold, the scattering point is discarded; or if the energy value of the scattering point is greater than or equal to the energy threshold, the following processing is performed:
when the energy value of the scattering point is greater than or equal to an energy value of a reference point, the scattering point is added to the scattering point set, or when the energy value of the scattering point is less than an energy value of a reference point, the scattering point is discarded.

In the foregoing embodiment, the energy information and distance information of a target position may be collected by the radar sensor; and an energy-distance variation curve of the radar sensor is obtained according to the energy information and the distance information, and the energy threshold is determined according to the variation curve. Further, determining the energy threshold according to the variation curve may include: determining a first threshold curve according to the variation curve; obtaining a second threshold curve according to the noise data of the radar sensor; and determining the energy threshold according to the first threshold curve and the second threshold curve.

Step 203: according to characteristic information of a scattering point in the scattering point set, performing target detection on the scattering point. For example, for each scattering point in the scattering point set, target detection is performed on the scattering point based on the CFAR target detection algorithm (such as a conventional CFAR target detection algorithm, or a CFAR target detection algorithm put forward in this embodiment of this application) and based on characteristic information of the scattering point.

Based on the foregoing technical solution, this embodiment of the present invention provides a target detection method for a millimeter wave radar, where a scattering point in the range-Doppler plane may be filtered, such as using an energy threshold filter a scattering point in the range-Doppler plane or using an energy value of a reference point filter a scattering point in the range-Doppler plane. Therefore, when target detection is performed on scattering points by using the CFAR target detection algorithm, a quantity of scattering points can be reduced, a quantity of operations is reduced, and an operation speed is increased.

### Embodiment 3

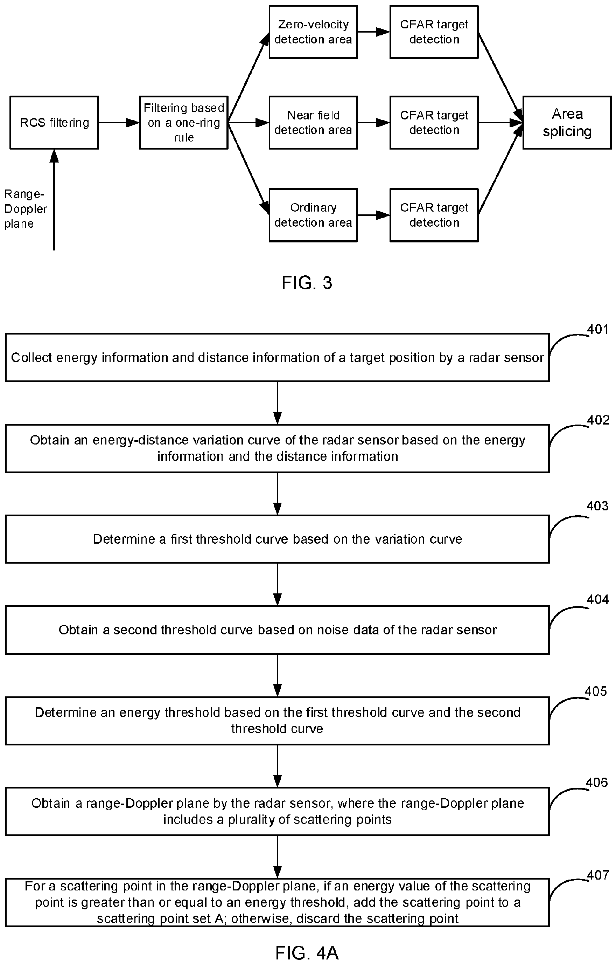

FIG. 3 is a flowchart of a target detection method applied to a radar sensor. The method includes:
1. RCS (Radar Cross Section) filtering. An energy threshold (that is, an RCS threshold) may be obtained by using a related method. After a range-Doppler plane is obtained by using a radar sensor, the energy threshold may be used to filter scattering points in the range-Doppler plane to filter out some invalid scattering points to avoid the invalid scattering from affecting subsequent determining and reduce the quantity of calculation.
2. Filtering based on a one-ring rule. For scattering points that filtered by RCS filtering, a one-ring rule is used to filter the scattering points for a second time to output scattering points of higher quality for a subsequent target detection algorithm. In this way, invalid scattering points can also be filtered out, and the quantity of calculation is further reduced, and processing efficiency is improved.
3. Area segmentation. An area is divided into a zero-velocity detection area, a near field detection area, and an ordinary detection area, and scattering points are grouped into the zero-velocity detection area, the near field detection area, or the ordinary detection area based on characteristic information of the scattering points. Since detection parameters are set separately for different areas, CFAR processing is implemented on scattering points in different areas by using different detection parameters, which improves the accuracy of CFAR processing.
4. Target detection. For a scattering point in the zero-velocity detection area, the detection parameters of the zero-velocity detection area may be used to perform target detection on the scattering point. For example, a CFAR target detection algorithm is used to perform target detection. For a scattering point in the near field detection area, the detection parameters of the near field detection area may be used to perform target detection on the scattering point. For example, the CFAR target detection algorithm is used to perform target detection. For a scattering point in the ordinary detection area, the detection parameters of the ordinary detection area may be used to perform target detection on the scattering point. For example, the CFAR target detection algorithm is used to perform target detection.
5. Area splicing. A target detection result of the zero-velocity detection area, a target detection result of the near field detection area, and a target detection result of the ordinary detection area are spliced to obtain a final target detection result.

### Embodiment 4

Referring to FIG. 4A, RCS filtering in Embodiment 3 may be implemented by performing the following steps.

Step 401: collecting energy information and distance information of a target position via a radar sensor.

Specifically, there is a target object at a target position A. In a moving process of a movable platform, a radar sensor deployed in the movable platform may continuously collect energy information and distance information of the target position A, for example, may collect the energy information and distance information of the target position A by using a corner reflector of the radar sensor (which may also be referred to as a radar reflector). For example, the energy 1 and a distance 1 of the target position A are collected at a time 1, the energy 2 and a distance 2 of the target position A are collected at a time 2, and so on.

Step 402: Obtaining an energy-distance variation curve of the radar sensor based on the energy information and the distance information. For example, the abscissa of the variation curve represents distance, and the ordinate represents energy.

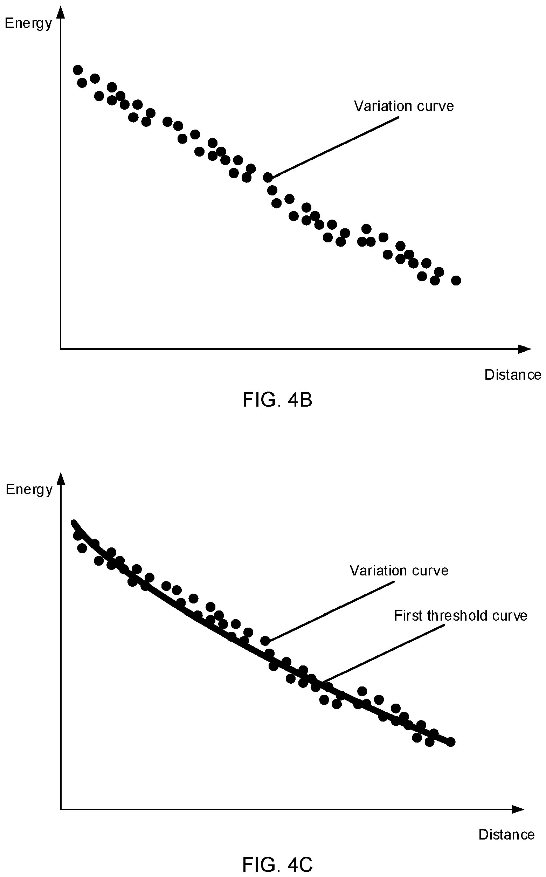

Specifically, the radar sensor may collect energy information and distance information. The energy and a distance corresponding to each moment corresponds to a coordinate point in a coordinate axis, and a curve composed of all coordinate points is the energy-distance variation curve of the radar sensor. Refer to FIG. 4B, which is a schematic diagram of the variation curve.

Step 403: determining a first threshold curve based on the variation curve.

Specifically, the variation curve may be fit by the Kalman filtering algorithm, so that the first threshold curve is obtained. Refer to FIG. 4C, which is a schematic diagram of the first threshold curve. Certainly, in practical applications, another algorithm may also be used to fit the variation curve,which is not limited.

Step 404: obtaining a second threshold curve according to noise data of the radar sensor.

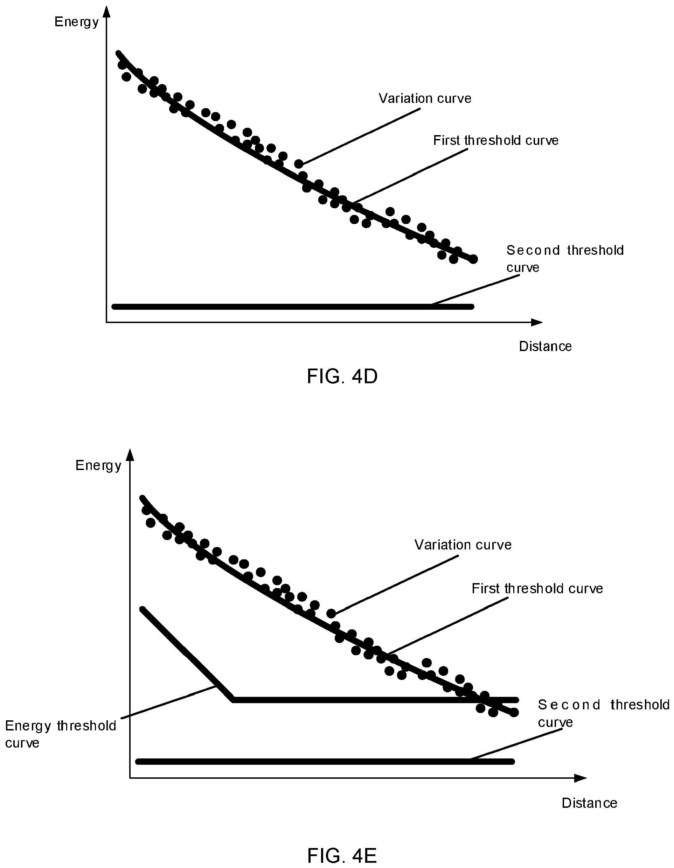

For example, a noise floor of the radar sensor can be added to a predetermined detection threshold (that is, a detection threshold configured based on experience) to obtain a second threshold curve. Refer to FIG. 4D, which is a schematic diagram of the second threshold curve. Certainly, in practical applications, the second threshold curve may also be obtained in other ways, for example, the noise floor of the radar sensor is directly used as the second threshold curve, which is not limited.

Step 405: determining an energy threshold according to the first threshold curve and the second threshold curve.

Specifically, the first threshold curve may be retracted by N (a value of N may be set based on experience, for example, set to 20) dB to obtain a third threshold curve. For each distance, a larger value of the energy of the distance in the third threshold curve and the energy of the distance in the second threshold curve is selected, and a curve composed of all larger values is used as an energy threshold curve. Refer to FIG. 4E, which is a schematic diagram of the energy threshold curve.

Further, each distance in the energy threshold curve may correspond to an energy threshold, different distances may correspond to a same energy threshold, and different distances may correspond to different energy thresholds.

Based on the foregoing energy threshold curve, the RCS filtering process may also include the following steps:
Step 406: obtaining a range-Doppler plane via a radar sensor, where the range-Doppler plane includes a plurality of scattering points, and each scattering point may correspond to parameters such as an energy value, a distance value, or a velocity value.

Specifically, energy values, distance values, and velocity values of a large quantity of scattering points may be obtained via the radar sensor. Relationships between energy values and distance values of all scattering points may constitute a range-Doppler plane, where the range-Doppler plane includes a plurality of scattering points. The way of obtaining the range-Doppler plane is not limited.

Step 407: for each scattering point in the range-Doppler plane, if an energy value of the scattering point is greater than or equal to an energy threshold, add the scattering point to the scattering point set A; otherwise, discard the scattering point.

For example, for each scattering point in the range-Doppler plane, an energy value and a distance value of the scattering point can be determined. The distance value of the scattering point may be used to query the energy threshold curve shown in FIG. 4E to obtain an energy threshold corresponding to the distance value. Further, if the energy value of the scattering point is greater than or equal to the energy threshold, the scattering point is added to the scattering point set A; otherwise, the scattering point is discarded.

For example, a scattering point 1 to a scattering point 800 exist in the range-Doppler plane, where energy values of the scattering point 1 to a scattering point 500 are greater than or equal to the energy threshold, but energy values of a scattering point 501 to the scattering point 800 are less than the energy threshold. Based on this, the scattering point set A may include the scattering point 1 to the scattering point 500.

### Embodiment 5

Filtering based on the one-ring rule in Embodiment 3 may be implemented in the following method: for each scattering point in a scattering point set A, if the energy value of the scattering point is greater than or equal to an energy threshold of a reference point, the scattering point is added to a scattering point set B; if the energy value of the scattering point is less than the energy threshold of the reference point, the scattering point is discarded. The reference point is one or more reference scattering points surrounding the scattering point.

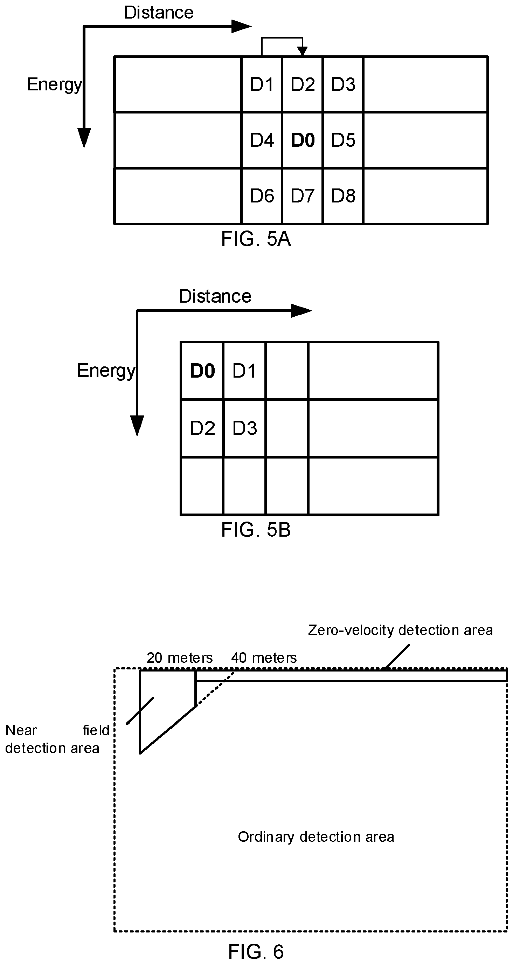

Referring to FIG. 5A, for the scattering point D0 in a scattering point set A, reference points for the scattering point D0 are the scattering point D1 to the scattering point D8, or a part of the scattering point D1 to the scattering point D8. This is not limited. Assuming that the reference points are the scattering point D1 to the scattering point D8, if the energy value of the scattering point D0 is greater than or equal to energy values of all the reference points, the scattering point D0 is added to the scattering point set B; or if an energy value of the scattering point D0 is less than any energy value of any reference point, the scattering point D0 is discarded.

In another example, referring to FIG. 5B, for the scattering point D0 in the scattering point set A, reference points for the scattering point D0 are the scattering point D1 to the scattering point D3. If the energy value of the scattering point D0 is greater than or equal to the energy values of all the reference points, the scattering point D0 is added to a scattering point set B; or if an energy value of the scattering point D0 is less than an energy value of any reference point, the scattering point D0 may be discarded.

For example, a scattering point set A includes a scattering point 1 to a scattering point 500, and energy values of the scattering point 1 to the scattering point 200 are greater than or equal to energy values of reference points, but energy values of a scattering point 201 to the scattering point 500 are less than energy thresholds of reference points. Based on this, a scattering point set B includes the scattering point 1 to the scattering point 200.

### Embodiment 6

Area segmentation in Embodiment 3 may be implemented by the following method: dividing an area into a zero-velocity detection area, a near field detection area, and an ordinary detection area; and for each scattering point in a scattering point set B, the scattering point can be grouped into the zero-velocity detection area, the near field detection area, or the ordinary detection area based on characteristic information (such as velocity information and/or distance information) of the scattering point.

Wherein, in a moving process of a movable platform, if velocity information of the scattering point and a moving velocity of the movable platform meet a preset velocity relationship, the scattering point is grouped into the zero-velocity detection area.

Wherein, in a moving process of a movable platform, according to the distance information of the scattering point, if it is determined that the scattering point is located in a preset area of the movable platform, the scattering point is grouped into the near field detection area.

Wherein, in a moving process of a movable platform, if velocity information of the scattering point and a moving velocity of the movable platform do not meet a preset velocity relationship, and according to the distance information of the scattering point, it is determined that the scattering point is not located in a preset area of the movable platform, the scattering point is grouped into the ordinary detection area.

Referring to FIG. 6, in a moving process of a movable platform, a road scenario may be divided into a zero-velocity detection area, a near field detection area, and an ordinary detection area. In this embodiment, since the detection parameters are set for different areas separately, different areas may correspond to a same or different detection parameters. For example, the detection parameters of the zero-velocity detection area are less than the detection parameters of the ordinary detection area, the detection parameters of the near field detection area are less than the detection parameters of the ordinary detection area, and the detection parameters of the zero-velocity detection area are the same as or different from the detection parameters of the near field detection area.

In a detection process of a radar sensor, there are plenty of stationary objects relative to the ground, reflected on a range-Doppler plane of a radar, which is manifested as most of the scattering points are concentrated in the zero-velocity detection area, and sparse moving object points are scattered in other areas than the zero-velocity detection area. Apparently, due to a distance dimension is full of a plurality of scattering points, there is a large amount of strong reflected energy on an entire velocity line, that is, energy in the zero-velocity detection area is generally stronger, and a large quantity of strong scattering points will form a blocking effect.

Therefore, in the case of the same reflected energy, the zero-velocity detection area is not easy to detect a target point compared with the ordinary detection area, which results a nearby moving object fails to be detected. In response to the foregoing find, in this embodiment of this application, the detection parameters of the zero-velocity detection area may be less than the detection parameters of the ordinary detection area, and the targets in the zero-velocity detection area is detected by reducing the detection parameters of the zero-velocity detection area.

Velocity information of scattering points in the zero-velocity detection area and a moving velocity of the movable platform may meet a preset velocity relationship. If the velocity information and the moving velocity are the same or approximate, the scattering points may be grouped into the zero-velocity detection area. Specifically, the scattering points in the zero-velocity detection area are decided by the moving velocity of the movable platform (which may be a moving velocity obtained by using a signal processing algorithm, or may be a moving velocity detected by the movable platform itself). Preferably, the moving velocity of the movable platform may be converted into an energy value A, and then the energy value A is used to determine an energy interval, such as (energy value A-1, energy value A+1). Certainly, the energy intervals are only examples, and there is no limitation on this. In addition, a distance interval may be (specified value 1, specified value 2). For example, the specified value 1 is 20 meters, and the specified value 2 is a maximum unambiguous range. Certainly, the distance intervals are only examples, and there is no limitation on this. After obtaining the energy intervals and the distance intervals, a plane R may be obtained. For each scattering point in the scattering point set B, based on the energy and a distance of the scattering point, it may be determined whether the scattering point is located in the plane R; and if so, the scattering point is a scattering point in the zero-velocity detection area; otherwise, the scattering point is not a scattering point in the zero-velocity detection area.

For example, a scattering point 1 to a scattering point 150 in the scattering point set B are in the zero-velocity detection area, and a collection of these scattering points is referred to as a scattering point set C, where the scattering point set C includes the scattering point 1 to the scattering point 150.

In a detection process of the radar sensor, for a forward radar sensor, when a distance between a stationary object and the movable platform is relatively short, since the stationary object is no longer close to zero degrees relative to the movable platform, due to a cos operation relationship, at a same vehicle velocity v, a radial velocity (that is, v*cosA, where A is an angle of the object relative to a forward direction of the radar sensor) of the stationary object that is detected by the radar sensor will be smaller and smaller, and a difference between a moving velocity of the stationary object and a moving velocity of the movable platform will be larger and larger, which leads to the possibility of misidentifying the stationary object as a moving target. For the foregoing find, in this embodiment of this application, a part of the areas are divided as a near field detection area, where the detection parameters of the near field detection area may be less than the detection parameters of the ordinary detection area, and targets in the near field detection area are detected by reducing the detection parameters of the near field detection area.

Objects in the near field detection area are relatively complex and may be moving objects or stationary objects. Therefore, the detection parameters of the near field detection area may be greater than the detection parameters of the zero-velocity detection area. By the setting, the objects in the near field detection area can be recognized more accurately. Certainly, the detection parameters of the near field detection area may also be less than or equal to the detection parameters of the zero-velocity detection area.

Referring to FIG. 6, a distance range of the near field detection area may be 0 to20 meters, and a trapezoid slope part is determined based on the moving velocity of the movable platform, and there is no limitation on this matter. Certainly, another manner may also be used to determine the distance range of the near field detection area, as long as the distance range of the near field detection area is provided.

The scattering points in the near field detection area may be located in a preset area of the movable platform, that is, a trapezoid area shown in FIG. 6. Specifically, for each scattering point in the scattering point set B, based on the distance of the scattering point, it may be determined whether the scattering point is located in the preset area of the movable platform; and if yes, the scattering point is a scattering point in the near field detection area; otherwise, the scattering point is not a scattering point in the near field detection area.

For example, the scattering point 151 to the scattering point 180 in the scattering point set B are in the near field detection area, and the set of the scattering points is referred to as a scattering point set D, and the scattering point set D includes the scattering point 151 to the scattering point 180.

Apart from the zero-velocity detection area and the near field detection area, the remaining area is an open detection area of moving objects, and this area is referred to as an ordinary detection area. In the ordinary detection area, there are moving objects with velocities, and the moving objects are relatively sparse. It is relatively accurate and easy to separately perform target detection on a scattering point in the ordinary detection area, which helps to improve an detection effect of the target.

For each scattering point in the scattering point set B, if the scattering point is located neither in the zero-velocity detection area nor in the near field detection area, the scattering point is located in the ordinary detection area.

For example, the scattering point 181 to the scattering point 200 in the scattering point set B are in the ordinary detection area, and the collection of the scattering points is referred to as a scattering point set E, and the scattering point set E includes the scattering point 181 to the scattering point 200.

### Embodiment 7

The target detection in Embodiment 3 may be implemented in the following method: for the scattering points in the zero-velocity detection area, the detection parameters of the zero-velocity detection area may be used to perform target detection on the scattering points. For scattering points in the near field detection area, the detection parameters of the near field detection area may be used to perform target detection on the scattering points. For scattering points in an ordinary detection area, the detection parameters of the ordinary detection area may be used to perform target detection on the scattering points. A CFAR target detection algorithm may be used to perform target detection on scattering points when detection parameters are used to perform target detection on the scattering points.

In an example, the detection parameters may include but is not limited to: a reference quantity (that is, a quantity of reference scattering points), a protection quantity (that is, a quantity of protection scattering points), a sorting sequence number, and a threshold.

The reference quantity, the protection quantity, the sorting sequence number, and the threshold may all be configured based on experience. In addition, the threshold of the zero-velocity detection area may be less than the threshold of the ordinary detection area, and the threshold of the near field detection area may be less than the threshold of the ordinary detection area.

The threshold of the zero-velocity detection area can be dynamically adjusted based on the quantity of stationary points. For example, when more stationary points need to be displayed, the threshold of the zero-velocity detection area may be reduced; or when fewer stationary points need to be displayed, the threshold of the zero-velocity detection area may be increased.

The threshold of the near field detection area can be dynamically adjusted based on the quantity of stationary points. For example, when more stationary points need to be displayed, the threshold of the near field detection area may be reduced; or when fewer stationary points need to be displayed, the threshold of the near field detection area may be increased.

Byreducing the threshold of the zero-velocity detection area, a blocking effect of the target can be prevented, so that the target can be detected more accurately. Specifically, because all scattering points in the zero-velocity detection area have higher intensity, the threshold of the zero-velocity detection area is set to be lower, so that some stationary points can be prevented from being blocked. In addition, by properly configuring the threshold of the near field detection area, the target can be detected more accurately, and effective detection results can be obtained. In addition, by properly configuring the threshold of the ordinary detection area, the target can be detected more accurately, and effective detection results can be obtained.

Table 1 is an example of detection parameters, where the detection parameters are not limited.

**Table 1**

| | Zero-velocity detection area | Near field detection area | Ordinary detection area |
|---|---|---|---|
| Distance reference quantity | 2 | 2 | 2 |
| Distance protection quantity | 3 | 4 | 3 |
| Energy reference quantity | 3 | 3 | 3 |
| Energy protection quantity | 2 | 2 | 2 |
| Sorting sequence number | 4 | 4 | 4 |
| Threshold | 5 | 8 | 12 |

In an example, using a CFAR target detection algorithm to perform target detection on a scattering point may include: determining reference scattering points of the scattering point according to the reference quantity and the protection quantity; sorting all the reference scattering points, and selecting a reference scattering point according to the sorting sequence number; and determining, based on an energy value of the scattering point, an energy value of the selected reference scattering point, and the threshold, whether the scattering point is a detection target.

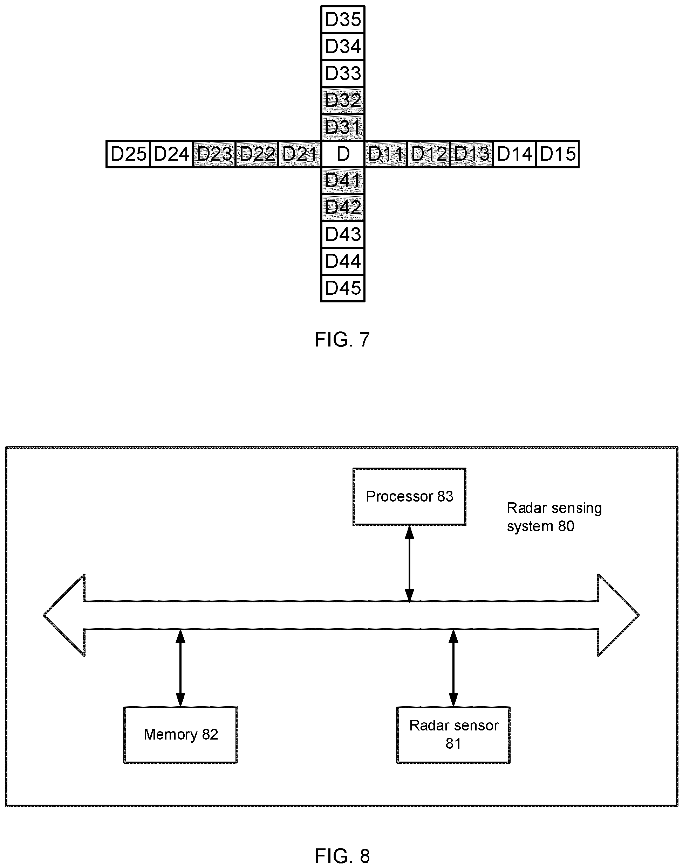

The following describes an implementation of the foregoing CFAR target detection algorithm with reference to a schematic diagram of OS-CFAR (that is, ordered statistics CFAR) processing shown in FIG. 7. In this application scenario, the process of processing a scattering point in the zero-velocity detection area is used as an example. Processing procedure of the near field detection area and the ordinary detection area are similar to processing procedure of the zero-velocity detection area, and won't be repeated in a subsequent embodiment.

Referring to FIG. 7, for the scattering point D in the zero-velocity detection area, since the distance protection quantity is 3, the left side of the scattering point D includes three protection scattering points, such as a scattering point D21, a scattering point D22, and a scattering point D23, and the right side of the scattering point D includes three protection scattering points, such as a scattering point D11, a scattering point D12, and a scattering point D13. Since the energy protection quantity is 2, therefore, the upper side of the scattering point D includes two protection scattering points, such as a scattering point D31 and a scattering point D32, and a lower side of the scattering point D includes two protection scattering points, such as a scattering point D41 and a scattering point D42. All the foregoing protection scattering points do not participate in subsequent calculation.

Since the distance reference quantity is 2, the left side of the scattering point D includes two reference scattering points, such as a scattering point D24 and a scattering point D25, and the right side of the scattering point D includes two reference scattering points, such as a scattering point D14 and a scattering point D15. Since the energy reference quantity is 3, the upper side of the scattering point D includes three reference scattering points, such as a scattering point D33, a scattering point D34, and a scattering point D35, and the lower side of the scattering point D includes three reference scattering points, such as a scattering point D43, a scattering point D44, and a scattering point D45. All the foregoing reference scattering points participate in subsequent calculation.

In conclusion, the following reference scattering points may be obtained: the scattering point D24, the scattering point D25, the scattering point D14, the scattering point D15, the scattering point D33, the scattering point D34, the scattering point D35, the scattering point D43, the scattering point D44, and the scattering point D45. Further, the scattering points are sorted according to the energy value of each scattering point. For example, the scattering points are sorted in descending order of the energy values, or the scattering points are sorted in ascending order of the energy values. Since the sorting sequence number is 4, a fourth reference scattering point is selected based on a sorting result, assuming that the fourth reference scattering point is the scattering point D25.

Then a level estimated value is determined according to an energy value of the scattering point D25 and the threshold 5. For example, a product of the energy value of the scattering point D25 and the threshold 5 is used as a level estimated value of background clutter power. Certainly, the level estimated value may also be determined in other methods. There is no limitation. If an energy value of the scattering point D is greater than or equal to the level estimated value, it is determined that the scattering point D is a detection target; or if an energy value of the scattering point D is not greater than the level estimated value, it is determined that the scattering point D is not a detection target, that is, a background noise.

Based on the foregoing technical solution, this embodiment of the present invention provides a target detection method for a millimeter wave radar, where by grouping scattering points into areas, and different areas use different detection parameters, so as to solve problems such as a target blocking effect of target detection and detection of a stationary point, etc. The method can effectively distinguish between stationary objects and moving objects, improve the accuracy of target detection, improve the efficiency of target detection, and improve the effect of target detection.

In the foregoing method, the scattering points in the Range-Doppler plane may be filtered, sch as using an energy threshold to filter the scattering points in the range-Doppler plane, or using an energy value of a reference point to filter the scattering points in the range-Doppler plane. Therefore, when target detection is performed on scattering points by using the CFAR target detection algorithm, the quantity of scattering points can be reduced, the amount of calculation can be reduced, and the calculation speed can be increased.

### Embodiment 8

Based on the same idea as the foregoing method, referring to FIG. 8, this embodiment of the present invention further provides a radar sensing system 80. The radar sensing system 80 includes a radar sensor 81, a memory 82, and a processor 83, the memory 82 is configured to store computer instructions executable by the processor;
the processor 83 is configured to read the computer instructions from the memory to implement:
obtaining a scattering point set, where the scattering point set includes a plurality of scattering points;
grouping the plurality of scattering points into at least one area based on characteristic information of the scattering points; and
for the scattering points in each area, performing target detection on the scattering points in the area based on the detection parameters corresponding to the area, where detection parameters are set for different areas separately; and
the radar sensor 81 is configured to obtain the scattering point set and provide the scattering point set to the processor 83.

Preferably, the radar sensor 81 is also configured to obtain a range-Doppler plane, where the range-Doppler plane includes a plurality of scattering points; and
the processor 83 is further configured to: if an energy value of a scattering point in the range-Doppler plane is greater than or equal to an energy threshold, add the scattering point to the scattering point set; otherwise, discard the scattering point; or if an energy value of a scattering point in the range-Doppler plane is greater than or equal to an energy value of a reference point, add the scattering point to the scattering point set; otherwise, discard the scattering point; or if an energy value of a scattering point in the range-Doppler plane is less than an energy threshold, discard the scattering point; or if an energy value of a scattering point in the range-Doppler plane is greater than or equal to an energy threshold, when the energy value of the scattering point is greater than or equal to an energy value of a reference point, add the scattering point to the scattering point set, or when the energy value of the scattering point is less than an energy value of a reference point, discard the scattering point.

The radar sensor 81 is further configured to collect energy information and distance information of a target position; and
the processor 83 is further configured to obtain an energy-distance variation curve of the radar sensor according to the energy information and the distance information and determine the energy threshold based on the variation curve.

When determining the energy threshold based on the variation curve, the processor 83 is specifically configured to: determine a first threshold curve according to the variation curve; obtain a second threshold curve according to noise data of the radar sensor; and determine the energy threshold according to the first threshold curve and the second threshold curve.

When grouping a plurality of scattering points into the at least one area according to the characteristic information of the scattering points, the processor 83 is specifically configured to: for the scattering points in the scattering point set, group the scattering points into a zero-velocity detection area, a near field detection area, or an ordinary detection area according to characteristic information of the scattering points.

When grouping the scattering point into the zero-velocity detection area according to the characteristic information of the scattering point, the processor 83 is configured to: in a moving process of a movable platform, if the velocity information of the scattering point and the moving velocity of the movable platform meet a preset velocity relationship, group the scattering point into the zero-velocity detection area; when grouping the scattering point into the near field detection area according to the characteristic information of the scattering point, the processor 83 is configured to: in a moving process of a movable platform, if it is determined, according to distance information of the scattering point, that the scattering point is located in a preset area of the movable platform, group the scattering point into the near field detection area; or when grouping the scattering point into the ordinary detection area according to the characteristic information of the scattering point, the processor 83 is configured to: in a moving process of a movable platform, if velocity information of the scattering point and the moving velocity of the movable platform do not meet a preset velocity relationship, and it is determined, according to the distance information of the scattering point, that the scattering point is not located in a preset area of the movable platform, group the scattering point into the ordinary detection area.

When performing target detection on the scattering point in the area according to the detection parameters corresponding to the area, the processor 83 is specifically configured to: if the detection parameters include a reference quantity, a protection quantity, a sorting sequence number, and a threshold, determine reference scattering points for the scattering point according to the reference quantity and the protection quantity; sort all the reference scattering points, and select a reference scattering point according to the sorting sequence number; and determine, according to the energy value of the scattering point, the energy value of the selected reference scattering point, and the threshold, whether the scattering point is a detection target. Further, when determining, according to the energy value of the scattering point, the energy value of the selected reference scattering point, and the threshold, whether the scattering point is a detection target, the processor 83 is specifically configured to: determine a level estimated value based on the energy value of the selected reference scattering point and the threshold; and if the energy value of the scattering point is greater than or equal to the level estimated value, determine that the scattering point is a detection target; otherwise, determine that the scattering point is not a detection target.

### Embodiment 9

Based on the same idea as the foregoing method, this embodiment of the present invention further provides a radar sensing system, including a radar sensor, a memory, and a processor. The memory is configured to store computer instructions executable by the processor. The processor is configured to read the computer instructions from the memory to implement the following: obtaining a range-Doppler plane, where the range-Doppler plane includes a plurality of scattering points, and the scattering points in the range-Doppler plane correspond to energy values; for scattering points in the range-Doppler plane, adding the scattering point to a scattering point set based on an energy value of the scattering point and an energy threshold, or discarding the scattering point; and based on characteristic information of a scattering point in the scattering point set, performing target detection on the scattering point. The radar sensor is configured to obtain the range-Doppler plane and provide the range-Doppler plane to the processor.

When adding the scattering point to the scattering point set based on the energy value of the scattering point and the energy threshold, or discarding the scattering point, the processor is specifically configured to: if the energy value of the scattering point is greater than or equal to the energy threshold, add the scattering point to the scattering point set; otherwise, discard the scattering point; or if the energy value of the scattering point is less than the energy threshold, discard the scattering point; or if the energy value of the scattering point is greater than or equal to the energy threshold, when the energy value of the scattering point is greater than or equal to an energy value of a reference point, add the scattering point to the scattering point set, or when the energy value of the scattering point is less than an energy value of a reference point, discard the scattering point.

The radar sensor is further configured to collect energy information and distance information of a target position; and
the processor is further configured to obtain an energy-distance variation curve of the radar sensor based on the energy information and the distance information and determine the energy threshold based on the variation curve.

When determining the energy threshold according to the variation curve, the processor is specifically configured to: determine a first threshold curve according to the variation curve; obtain a second threshold curve based on the noise data of the radar sensor; and determine the energy threshold according to the first threshold curve and the second threshold curve.

Based on the same idea as the foregoing method, this embodiment of the present invention further provides a computer-readable storage medium, where the computer-readable storage medium stores computer instructions, and when the computer instructions are executed, the target detection method for a radar sensor is implemented.

The system, apparatus, module, or unit described in the foregoing embodiments may be implemented by a computer chip or an entity, or is implemented by a product having a function. A typical device for implementation is a computer. A specific form of the computer may be a personal computer, a laptop computer, a cellular phone, a camera phone, a smartphone, a personal digital assistant, a media player, a navigation device, an e-mail transceiver, a game console, a tablet computer, a wearable device, or a combination of any several of the devices.

For ease of description, when the foregoing apparatus is described, the functions are divided into different units and described separately. Certainly, when the present invention is implemented, functions of all units may be implemented in one or more software and/or hardware.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the embodiments of the present invention may use a form of a computer program product implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

In addition, these computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or other programmable devices, thereby generating computer-implemented processing. Therefore, the instructions executed on the computer or the other programmable devices provide steps for implementing a specific function in one or more processes in the flowcharts and/or in one or more blocks in the block diagrams.

The foregoing descriptions are merely embodiments of the present invention, but are not intended to limit the present invention. For a person skilled in the art, the present invention may be subject to various changes and variations. Any modification, equivalent replacement, or improvement made without departing from the spirit and principle of the present invention should fall within the scope of the claims of the present invention.

## Claims

1. A target detection method applied to a radar sensor, **characterized in that**, including:
obtaining a scattering point set by a radar sensor, wherein the scattering point set includes a plurality of scattering points;
grouping the plurality of scattering points into at least one area according to characteristic information of the plurality of scattering points; and
for a scattering point in each area, performing a target detection on the scattering point in the area according to detection parameters corresponding to the each area, wherein the detection parameters are individually set for different areas separately.

2. The method according to claim 1, **characterized in that**, wherein the obtaining of the scattering point set by the radar sensor specifically includes:
obtaining a range-Doppler plane by the radar sensor, wherein the range-Doppler plane includes multiple scattering points; and if an energy value of a scattering point in the range-Doppler plane is greater than or equal to an energy threshold, adding the scattering point to the scattering point set; otherwise, discarding the scattering point.

3. The method according to claim 1, **characterized in that**, wherein
the obtaining of the scattering point set by a radar sensor specifically includes:
obtaining a range-Doppler plane by the radar sensor, wherein the range-Doppler plane includes multiple scattering points; and if an energy value of a scattering point in the range-Doppler plane is greater than or equal to an energy value of at least one reference point, adding the scattering point to the scattering point set; otherwise, discarding the scattering point.

4. The method according to claim 1, **characterized in that**, wherein
the obtaining of the scattering point set by a radar sensor specifically includes:
obtaining a range-Doppler plane by the radar sensor, wherein the range-Doppler plane includes multiple scattering points; and
if an energy value of a scattering point in the range-Doppler plane is less than an energy threshold, discarding the scattering point; or
if an energy value of a scattering point in the range-Doppler plane is greater than or equal to an energy threshold, when the energy value of the scattering point is greater than or equal to an energy value of at least one reference point, adding the scattering point to the scattering point set, or when the energy value of the scattering point is less than the energy value of the at least one reference point, discarding the scattering point.

5. The method according to claim 2 or 4, **characterized in that**, the method further includes:
collecting energy information and distance information of a target position by the radar sensor; and
obtaining an energy-distance variation curve of the radar sensor according to the energy information and the distance information and determining the energy threshold based on the variation curve.

6. The method according to claim 5, **characterized in that**, wherein
the determining of the energy threshold according to the variation curve includes:
determining a first threshold curve based on the variation curve;
obtaining a second threshold curve according to noise data of the radar sensor; and
determining the energy threshold according to the first threshold curve and the second threshold curve.

7. The method according to claim 3 or 4, **characterized in that**, wherein the at least one reference point for the scattering point in the range-Doppler plane includes: one or more reference scattering points surrounding the scattering point.

8. The method according to claim 1, **characterized in that**, wherein
the grouping of the plurality of scattering points into the at least one area according to the characteristic information of the plurality of scattering points includes:
for a scattering point in the scattering point set, grouping the scattering point into a zero-velocity detection area, a near field detection area, or an ordinary detection area according to the characteristic information of the scattering point.

9. The method according to claim 8, **characterized in that**, wherein
the characteristic information includes velocity information and/or distance information.

10. The method according to claim 8, **characterized in that**, wherein the grouping of the scattering point into the zero-velocity detection area according to the characteristic information of the scattering point specifically includes:
in a moving process of a movable platform, if velocity information of the scattering point and a moving velocity of the movable platform meet a preset velocity relationship, grouping the scattering point into the zero-velocity detection area.

11. The method according to claim 8, **characterized in that**, wherein the grouping of the scattering point into the near field detection area according to the characteristic information of the scattering point specifically includes:
in a moving process of a movable platform, if it is determined, according to distance information of the scattering point, that the scattering point is located in a preset area of the movable platform, grouping the scattering point into the near field detection area.

12. The method according to claim 8, **characterized in that**, wherein the grouping of the scattering point into the ordinary detection area according to the characteristic information of the scattering point specifically includes:
in a moving process of a movable platform, if velocity information of the scattering point and a moving velocity of the movable platform do not meet a preset velocity relationship, and it is determined, based on distance information of the scattering point, that the scattering point is not located in a preset area of the movable platform, grouping the scattering point into the ordinary detection area.

13. The method according to claim 1, **characterized in that**, wherein
the area includes a zero-velocity detection area, a near field detection area, or an ordinary detection area;
detection parameters of the zero-velocity detection area are less than detection parameters of the ordinary detection area; and
detection parameters of the near field detection area are less than the detection parameters of the ordinary detection area.

14. The method according to claim 1, **characterized in that**, wherein the performing of the target detection on the scattering point in the area according to the detection parameters corresponding to the area specifically includes:
performing the target detection on the scattering point in the area based on a constant false-alarm rate (CFAR) target detection algorithm and the detection parameters corresponding to the area, wherein the detection parameters include CFAR detection parameters.

15. The method according to claim 1, **characterized in that**, wherein the performing of the target detection on the scattering point in the area based on the detection parameters corresponding to the area specifically includes:
if the detection parameters include a reference quantity, a protection quantity, a sorting sequence number, and a threshold, determining at least one reference scattering point for the scattering point based on the reference quantity and the protection quantity;
sorting all the at least one reference scattering point, and selecting a selected reference scattering point according to the sorting sequence number; and
determining whether the scattering point is a detection target according to an energy value of the scattering point, an energy value of the selected reference scattering point, and the threshold.

16. The method according to claim 15, **characterized in that**, wherein
the determining of, according to the energy value of the scattering point, the energy value of the selected reference scattering point, and the threshold, whether the scattering point is the detection target includes:
determining a level estimated value according to the energy value of the selected reference scattering point and the threshold; and
if the energy value of the scattering point is greater than or equal to the level estimated value, determining that the scattering point is a detection target; otherwise, determining that the scattering point is not the detection target.

17. The method according to claim 15, **characterized in that**, wherein
the area includes a zero-velocity detection area, a near field detection area, or an ordinary detection area;
a threshold of the zero-velocity detection area is less than a threshold of the ordinary detection area; and
a threshold of the near field detection area is less than the threshold of the ordinary detection area.

18. The method according to claim 17, **characterized in that**, wherein
the threshold of the zero-velocity detection area is dynamically adjustable based on a quantity of stationary points; and
the threshold of the near field detection area is dynamically adjustable based on the quantity of stationary points.

19. The method according to any one of claims 1 to 4, **characterized in that**, wherein the radar sensor includes a millimeter wave radar sensor.

20. A target detection method applied to a radar sensor, **characterized in that**, including:
obtaining a range-Doppler plane by using a radar sensor, wherein the range-Doppler plane includes a plurality of scattering points, and the plurality of scattering points in the range-Doppler plane correspond to energy values;
for a scattering point in the range-Doppler plane, adding the scattering point to a scattering point set according to an energy value of the scattering point and an energy threshold, or discarding the scattering point; and
according to characteristic information of a scattering point in the scattering point set, performing a target detection on the scattering point.

21. The method according to claim 20, **characterized in that**, wherein
the adding of the scattering point to a scattering point set according to the energy value of the scattering point and the energy threshold, or discarding the scattering point includes:
if the energy value of the scattering point is greater than or equal to the energy threshold, adding the scattering point to the scattering point set; otherwise, discarding the scattering point.

22. The method according to claim 20, **characterized in that**, wherein
the adding of the scattering point to the scattering point set according to the energy value of the scattering point and the energy threshold, or discarding the scattering point includes:
if the energy value of the scattering point is less than the energy threshold, discarding the scattering point; or
if the energy value of the scattering point is greater than or equal to the energy threshold, when the energy value of the scattering point is greater than or equal to an energy value of each at least one reference point, adding the scattering point to the scattering point set, or when the energy value of the scattering point is less than an energy value of any at least one reference point, discarding the scattering point.

23. The method according to claim 21 or 22, **characterized in that**, wherein the method further includes:
collecting energy information and distance information of a target position by the radar sensor; and
obtaining an energy-distance variation curve of the radar sensor based on the energy information and the distance information and determining the energy threshold based on the variation curve.

24. The method according to claim 23, **characterized in that**, wherein
the determining of the energy threshold according to the variation curve includes:
determining a first threshold curve according to the variation curve;
obtaining a second threshold curve according to noise data of the radar sensor; and
determining the energy threshold based on the first threshold curve and the second threshold curve.

25. The method according to any one of claims 20 to 23, **characterized in that**, wherein
the radar sensor includes a millimeter wave radar sensor.

26. A radar sensing system, **characterized in that**, including a radar sensor, a memory, and a processor, wherein the memory is configured to store computer instructions executable by the processor;
the processor is configured to read the computer instructions from the memory to implement:
obtaining a scattering point set, wherein the scattering point set includes a plurality of scattering points;
grouping the plurality of scattering points into at least one area according to characteristic information of the plurality of scattering points; and
for a scattering point in each area, performing target detection on the scattering point in the area based on detection parameters corresponding to the area, wherein the detection parameters are individually set for different areas separately; and
the radar sensor is configured to obtain the scattering point set and provide the scattering point set to the processor.

27. The system according to claim 26, **characterized in that**, wherein the radar sensor is further configured to obtain a range-Doppler plane, wherein the range-Doppler plane includes multiple scattering points; and
the processor is further configured to: if an energy value of a scattering point in the range-Doppler plane is greater than or equal to an energy threshold, add the scattering point to the scattering point set; otherwise, discard the scattering point; or
if an energy value of a scattering point in the range-Doppler plane is greater than or equal to an energy value of each at least one reference point, add the scattering point to the scattering point set; otherwise, discard the scattering point; or
if an energy value of a scattering point in the range-Doppler plane is less than an energy threshold, discard the scattering point; or if an energy value of a scattering point in the range-Doppler plane is greater than or equal to an energy threshold, when the energy value of the scattering point is greater than or equal to an energy value of each at least one reference point, add the scattering point to the scattering point set, or when the energy value of the scattering point is less than an energy value of any at least one reference point, discard the scattering point.

28. The system according to claim 27, **characterized in that**, wherein
the radar sensor is further configured to collect energy information and distance information of a target position; and
the processor is further configured to obtain an energy-distance variation curve of the radar sensor according to the energy information and the distance information, and determine the energy threshold based on the variation curve.

29. The system according to claim 28, **characterized in that**, wherein
when determining the energy threshold based on the variation curve, the processor is specifically configured to:
determine a first threshold curve based on the variation curve;
obtain a second threshold curve based on noise data of the radar sensor; and
determine the energy threshold based on the first threshold curve and the second threshold curve.

30. The system according to claim 26, **characterized in that**, wherein when grouping the plurality of scattering points into the at least one area based on the characteristic information of the scattering points, the processor is specifically configured to:
for a scattering point in the scattering point set, group the scattering point into a zero-velocity detection area, a near field detection area, or an ordinary detection area according to the characteristic information of the scattering point.

31. The system according to claim 30, **characterized in that**, wherein
when grouping the scattering point into the zero-velocity detection area according to the characteristic information of the scattering point, the processor is configured to: in a moving process of a movable platform, if velocity information of the scattering point and a moving velocity of the movable platform meet a preset velocity relationship, group the scattering point into the zero-velocity detection area;
when grouping the scattering point into the near field detection area according to the characteristic information of the scattering point, the processor is configured to: in the moving process of a movable platform, if it is determined, based on distance information of the scattering point, that the scattering point is located in a preset area of the movable platform, group the scattering point into the near field detection area; or
when grouping the scattering point into the ordinary detection area according to the characteristic information of the scattering point, the processor is configured to: in the moving process of a movable platform, if the velocity information of the scattering point and the moving velocity of the movable platform do not meet the preset velocity relationship, and it is determined, based on the distance information of the scattering point, that the scattering point is not located in the preset area of the movable platform, group the scattering point into the ordinary detection area.

32. The system according to claim 26, **characterized in that**, wherein when performing target detection on the scattering point in the area based on the detection parameters corresponding to the area, the processor is specifically configured to:
if the detection parameters include a reference quantity, a protection quantity, a sorting sequence number, and a threshold, determine at least one reference scattering point for the scattering point according to the reference quantity and the protection quantity;
sort all the at least one reference scattering point, and select a selected reference scattering point according to the sorting sequence number; and
determine whether the scattering point is a detection target based on an energy value of the scattering point, an energy value of the selected reference scattering point, and the threshold.

33. The system according to claim 32, **characterized in that**, wherein
when determining whether the scattering point is a detection target based on the energy value of the scattering point, the energy value of the selected reference scattering point, and the threshold, the processor is specifically configured to:
determine a level estimated value according to the energy value of the selected reference scattering point and the threshold; and
if the energy value of the scattering point is greater than or equal to the level estimated value, determine that the scattering point is a detection target; otherwise, determine that the scattering point is not the detection target.

34. A radar sensing system, **characterized in that**, including a radar sensor, a memory, and a processor, wherein the memory is configured to store computer instructions executable by the processor;
the processor is configured to read the computer instructions from the memory to implement: obtaining a range-Doppler plane, wherein the range-Doppler plane includes a plurality of scattering points, and the plurality of scattering points in the range-Doppler plane correspond to energy values;
for a scattering point in the range-Doppler plane, adding the scattering point to a scattering point set based on an energy value of the scattering point and an energy threshold, or discarding the scattering point; and
based on characteristic information of a scattering point in the scattering point set, performing target detection on the scattering point; and
the radar sensor is configured to obtain the range-Doppler plane and provide the range-Doppler plane to the processor.

35. The system according to claim 34, **characterized in that**, wherein
when adding the scattering point to the scattering point set based on the energy value of the scattering point and the energy threshold, or discarding the scattering point, the processor is specifically configured to:
if the energy value of the scattering point is greater than or equal to the energy threshold, add the scattering point to the scattering point set; otherwise, discard the scattering point; or
if the energy value of the scattering point is less than the energy threshold, discard the scattering point; or if the energy value of the scattering point is greater than or equal to the energy threshold, when the energy value of the scattering point is greater than or equal to an energy value of each at least one reference point, add the scattering point to the scattering point set, or when the energy value of the scattering point is less than an energy value of any at least one reference point, discard the scattering point.

36. The system according to claim 35, **characterized in that**, wherein
the radar sensor is further configured to collect energy information and distance information of a target position; and
the processor is further configured to obtain an energy-distance variation curve of the radar sensor based on the energy information and the distance information and determine the energy threshold based on the variation curve.

37. The system according to claim 36, **characterized in that**, wherein
when determining the energy threshold based on the variation curve, the processor is specifically configured to:
determine a first threshold curve based on the variation curve;
obtain a second threshold curve based on noise data of the radar sensor; and
determine the energy threshold based on the first threshold curve and the second threshold curve.

38. A computer-readable storage medium, **characterized in that**, wherein the computer-readable storage medium stores computer instructions, and when the computer instructions are executed, the target detection method according to claims 1 to 19 is implemented, or the target detection method according to claims 20 to 25 is implemented.
